# FASCICULE DE BREVET EUROPEEN

(11) **EP 0 929 882 B1**
(45) Date de publication et mention de la délivrance du brevet: **02.08.2000**
(21) Numéro de dépôt: 97912105.0
(22) Date de dépôt: 02.10.1997
(51) Int. Cl.: G08B 13/16

(54) **DISPOSITIF DE DETECTION DE L'INTRUSION D'UN CORPS DANS UN ESPACE PREDETERMINE**
VORRICHTUNG ZUR ERFASSUNG DES EINDRINGENS EINES KÖRPERS IN EINEN VORGEGEBENEN RAUM
DEVICE FOR DETECTING THE INTRUSION OF A BODY IN A PREDETERMINED SPACE

(30) Priorité: 07.10.1996 FR 9612192
(43) Date de publication de la demande: 21.07.1999
(73) Titulaire: SIEMENS AUTOMOTIVE S.A., 31036 Toulouse Cédex (FR)
(72) Inventeur: BONHOURE, Francis, F-31880 La Salvetat Saint Gilles (FR)
(74) Mandataire: Epping, Wilhelm, Dr.-Ing.
(86) Numéro de dépôt international: EP9705442
(87) Numéro de publication internationale: WO9815930

(56) Documents cités:
- EP-A- 0 293 004
- EP-A- 0 368 303
- WO-A-92/02831
- DE-A- 3 003 887
- PATENT ABSTRACTS OF JAPAN vol. 010, no. 062 (M-460), 12 mars 1986 & JP 60 209348 A (MATSUSHITA DENKO KK), 21 octobre 1985,

## Description

La présente invention est relative à un dispositif de détection de l'intrusion d'un corps dans un espace prédéterminé et, plus particulièrement, à un tel dispositif comprenant un émetteur d'ultrasons dans ledit espace, un capteur sensible aux échos de l'émission de l'émetteur dans ledit espace pour délivrer un signal représentatif desdits échos, et des moyens électroniques de traitement dudit signal pour diagnostiquer la présence éventuelle d'un corps mobile dans ledit espace.

On connaît de tels dispositifs conçus notamment pour déclencher une alarme à la suite de la détection d'une intrusion non autorisée dans un espace tel que l'habitacle d'un véhicule automobile par exemple. C'est une situation que l'on rencontre notamment quand un cambrioleur entre par effraction dans cet habitacle.

Dans les dispositifs de détection connus, l'émetteur d'ultrasons et le capteur d'échos sont tous deux montés dans des positions fixes, à l'intérieur de l'habitacle. Pour couvrir au mieux l'ensemble du volume de cet habitacle, il faut alors fixer cet émetteur et ce capteur dans des positions de compromis entre diverses positions assurant chacune une couverture optimale d'une partie seulement de ce volume. Il résulte de ce compromis que certaines parties ne sont pas surveillées de façon optimale. Les concepteurs sont alors amenés soit à focaliser la surveillance sur des zones particulièrement sensibles (celle du volant de direction, de l'autoradio, de la boîte à gants, par exemple) au détriment des autres, soit de multiplier les paires émetteur/capteur installées dans l'habitacle, solution qui a l'inconvénient d'être coûteuse.

On connaît également du document EP 0 293 004 un dispositif de détection à ultrasons comprenant un émetteur et un récepteur fixes l'un par rapport à l'autre, coopérant avec un réflecteur tournant placé sur l'axe émetteur / récepteur. Un tel dispositif, s'il permet un balayage du plan perpendiculaire à cet axe, fait intervenir un réflecteur mobile dont la réalisation et l'ajustement sont difficiles et coûteux, et ne permet de renvoyer vers le récepteur que les échos se produisant sur des surfaces normales à l'axe du faisceau incident. Cette limitation rend son emploi délicat dans un environnement de forme complexe tel qu'un véhicule automobile, où les échos ne s'effectuent qu'exceptionnellement en direction du réflecteur, rendant ainsi le signal reçu inexploitable.

La présente invention a donc pour but de réaliser un dispositif de détection de l'intrusion d'un corps dans un espace tel que l'habitacle d'un véhicule automobile, conçu pour surveiller efficacement l'ensemble de cet espace tout en restant de fabrication et d'installation peu coûteuse.

On atteint ce but de l'invention, ainsi que d'autres qui apparaîtront à la lecture de la description qui va suivre, avec un dispositif de détection du type décrit en préambule de la présente description, remarquable en ce qu'il comprend des moyens pour balayer l'espace en cause avec le faisceau d'ultrasons issu de l'émetteur et des moyens pour déplacer simultanément le capteur d'échos de manière à optimiser le rapport signal/bruit de la sortie dudit capteur.

Grâce à la liaison ainsi établie entre les déplacements de l'émetteur et du capteur, le dispositif suivant l'invention produit un signal permettant de surveiller efficacement, et économiquement, l'ensemble de l'espace à l'aide d'une seule paire émetteur/capteur.

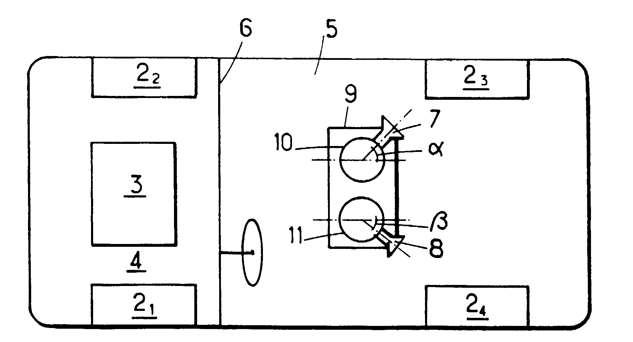

D'autres caractéristiques et avantages de la présente invention apparaîtront à la lecture de la description qui va suivre et à l'examen du dessin annexé où la figure unique représente schématiquement un véhicule automobile équipé du dispositif suivant l'invention.

Sur cette figure, on a schématisé les roues 2₁ à 2₄ du véhicule 1 propulsé par un moteur 3 placé dans un compartiment 4 séparé de l'habitacle 5 du véhicule par une cloison pare-feu 6.

Le dispositif de détection d'intrusion dans cet habitacle suivant l'invention comprend un émetteur d'ultrasons 7 et un capteur d'échos 8 montés sur une base 9, fixée par exemple dans ou sur le plafond de l'habitacle et comprenant des moyens électroniques (non représentés) pour traiter le signal délivré par le capteur 8. Ces moyens électroniques sont, pour l'essentiel, classiques et n'exigent pas une description plus détaillée. Classiquement encore, ces moyens commandent le déclenchement d'une alarme (non représentée), sonore par exemple, quand une intrusion non autorisée, avec effraction par exemple, est détectée lors du traitement du signal délivré par le capteur.

Le mécanisme de cette détection, lors d'une telle intrusion, est bien connu. Lorsqu'un corps mobile, tel qu'un bras d'un cambrioleur, entre dans le faisceau d'ultrasons émis par l'émetteur 7, la fréquence des échos ultrasonores détectés par le capteur 8 s'écarte par effet Doppler de celle du faisceau émis du fait de la réflexion de ce faisceau sur le corps mobile. La détection, par les moyens électroniques embarqués, de cette variation de fréquence commande le déclenchement de l'alarme.

Suivant la présente invention, le dispositif comprend des moyens 10 pour balayer l'espace, ou volume, de l'habitacle 5 avec le faisceau d'ultrasons issu de l'émetteur 7 et des moyens 11 pour déplacer simultanément le capteur 8 de manière à optimiser le rapport signal/bruit de la sortie du capteur 8.

Grâce à ce balayage de l'habitacle, on comprend que la partie de cet habitacle qui est "éclairée" par le faisceau d'ultrasons peut être beaucoup plus importante que celle couverte par un faisceau fixe, et ce sans recourir à plus d'une paire émetteur/capteur, ce qui est économique.

Il importe cependant que, suivant la position occupée par l'émetteur 7 à un instant donné, l'orientation du capteur à cet instant, par rapport à l'émetteur, soit telle que le signal délivré par le capteur soit bien représentatif de la réflexion du faisceau sortant de l'émetteur 7 sur un éventuel corps mobile intrus. Il doit être débarrassé, autant que faire se peut, de composantes dues à des échos parasites sur les parois ou les sièges de l'habitacle, par exemple.

Pour ce faire, les moyens 10 et 11 précités peuvent prendre la forme de supports rotatifs motorisés sur lesquels sont montés l'émetteur 7 et le capteur 8 respectivement. Ces supports motorisés peuvent prendre toute forme connue permettant de donner à l'axe du faisceau émis et à l'axe de réception du capteur des orientations données, asservies l'une à l'autre pendant toute la durée de leur déplacement suivant une loi prédéterminée assurant l'optimisation du rapport signal/bruit de la sortie du capteur 8, comme indiqué plus haut. Cette loi peut être établie par le calcul ou, de manière plus pratique, par des essais au banc.

Des moyens d'asservissement de position des supports motorisés 10,11 dûment programmés pour assurer le respect de la loi établie, peuvent être associés aux moyens électroniques de traitement du signal délivré par le capteur 8, dans la base 9. Les supports motorisés 10, 11 incorporent des moyens de détection (non représentés) de leurs positions, par exemple leurs positions angulaires respectives α et β. Des signaux représentatifs de ces positions sont transmis aux moyens de traitement et aux moyens d'asservissement précités pour être pris en compte dans ce traitement d'une part, et dans l'exécution de la loi d'asservissement β = f(α) établie au banc, d'autre part.

Avantageusement, lors de l'établissement de cette loi, on fait en sorte de minimiser l'influence des échos parasites, opération qui a d'ailleurs une incidence bénéfique sur le rapport signal/bruit de la sortie du capteur (8).

Il est possible aussi d'assurer une commande des déplacements desdits supports motorisés 10, 11 propre à assurer la surveillance d'une zone particulière de l'habitacle. Cette disposition trouve son intérêt dans le fait que certaines parties de cet habitacle sont des cibles privilégiées par les cambrioleurs (boîte à gants, autoradio, volant de direction, plage arrière, etc.). Suivant la présente invention, on peut renforcer la surveillance de ces parties, par exemple par un balayage plus fréquent de celles-ci par le faisceau d'ultrasons émis par l'émetteur 7.

Il apparaît maintenant que l'invention présente de nombreux avantages, outre ceux déjà mentionnés concernant l'extension de la couverture du volume de l'habitacle par des moyens de mise en oeuvre économiques et la surveillance de zones particulières. C'est ainsi que l'invention donne au concepteur de véhicules une plus grande liberté quant à l'implantation de l'émetteur, du capteur et de leur base. Il est alors possible de les dissimuler plus soigneusement pour des raisons de sécurité ou d'esthétique. En outre, le dispositif suivant l'invention est adaptable à des véhicules différents sans autre coût que l'adaptation du logiciel assurant l'exécution de la loi d'asservissement β = f(α). L'utilisation d'un capteur mobile plutôt que fixe autorise de moindres exigences quant à ses performances, ce qui permet d'abaisser son coût.

Bien entendu, la présente invention n'est pas limitée au mode de réalisation décrit et représenté qui n'a été donné qu'à titre d'exemple. C'est ainsi que les supports rotatifs motorisés 10, 11 pourraient être remplacés par d'autres moyens de déplacement classiques assurant des déplacements en translation, ou en translation et rotation par exemple, en fonction de telle ou telle loi d'asservissement de position à mettre en oeuvre.

## Revendications

1. Dispositif de détection de l'intrusion d'un corps mobile dans un espace (5) prédéterminé, comprenant un émetteur (7) d'ultrasons dans ledit espace, un capteur (8) sensible aux échos de l'émission de l'émetteur dans ledit espace pour délivrer un signal représentatif desdits échos, et des moyens électroniques de traitement dudit signal pour diagnostiquer la présence éventuelle d'un corps mobile dans ledit espace (5), caractérisé en ce qu'il comprend a) des moyens (10) d'orientation de l'émetteur (7) pour balayer l'espace (5) avec le faisceau d'ultrasons et b) des moyens (11) pour déplacer simultanément le capteur d'échos (8) de manière à optimiser le rapport signal/bruit de la sortie dudit capteur (8).

2. Dispositif conforme à la revendication 1, caractérisé en ce qu'il comprend des moyens d'asservissement des positions de l'émetteur (7) et du capteur (8) l'une à l'autre, suivant une loi prédéterminée.

3. Dispositif conforme à la revendication 2, caractérisé en ce que ladite loi prédéterminée est conçue en outre pour minimiser l'influence d'éventuels échos parasites sur le signal délivré par ledit capteur (8).

4. Dispositif conforme à l'une quelconque des revendications 2 et 3, caractérisé en ce que l'émetteur (7) et le capteur (8) sont chacun associés à des moyens de détection de leur position délivrant un signal représentatif de cette position aux moyens électroniques de traitement du signal issu du capteur et aux moyens d'asservissement de position.

5. Dispositif conforme à l'une quelconque des revendications 1 à 4 , caractérisé en ce que lesdits moyens de balayage (10) et de déplacement (11) sont conçus pour permettre une surveillance renforcée d'au moins une zone particulière dudit espace (5).

6. Véhicule automobile comprenant un dispositif conforme à l'une quelconque des revendications 1 à 5 installé dans l'habitacle du véhicule, pour détecter toute intrusion dans l'espace dudit habitacle.

## Patentansprüche

1. Vorrichtung zum Detektieren des Eindringens eines beweglichen Körpers in einen vorgegebenen Raum (5), mit einem Ultraschallsender (7) in dem Raum, einem Empfänger (8), der auf das Echo der Abstrahlung des Senders in dem Raum anspricht, um ein das Echo darstellendes Signal abzugeben, und elektronischen Mitteln zum Verarbeiten des Signals, um das mögliche Vorhandensein eines beweglichen Körpers in dem Raum (5) festzustellen, dadurch gekennzeichnet, daß sie aufweist: a) Mittel (10) zum Ausrichten des Senders (7), um den Raum (5) mit dem Ultraschallstrahl zu überstreichen, und b) Mittel (11) zum gleichzeitigen Verstellen des Echo-Empfängers (8) derart, daß das Signal-Rausch-Verhältnis des Ausgangs des Empfängers (8) optimiert wird.

2. Vorrichtung nach Anspruch 1, dadurch gekennzeichnet, daß sie Mittel zum Regeln der Positionen des Senders (7) und des Empfängers (8) relativ zueinander nach einem vorgegebenen Gesetz aufweist.

3. Vorrichtung nach Anspruch 2, dadurch gekennzeichnet, daß das vorgegebene Gesetz unter anderem so beschaffen ist, daß der Einfluß eines möglichen parasitären Echos auf das von dem Empfänger (8) abgegebene Signal minimiert wird.

4. Vorrichtung nach einem der Ansprüche 2 und 3, dadurch gekennzeichnet, daß der Sender (7) und der Empfänger (8) jeweils Mitteln zum Detektieren ihrer Lage zugeordnet sind, die ein diese Lage darstellendes Signal an elektronische Mittel zur Verarbeitung des von dem Empfänger abgegebenen Signals und an die Lageregelungsmittel abgeben.

5. Vorrichtung nach einem der Ansprüche 1 bis 4, dadurch gekennzeichnet, daß die Mittel zum Überstreichen (10) und zum Verstellen (11) so ausgelegt sind, daß sie eine verstärkte Überwachung mindestens eines speziellen Bereiches des Raumes (5) erlauben.

6. Kraftfahrzeug mit einer Vorrichtung nach einem der Ansprüche 1 bis 5, die in die Kabine des Fahrzeugs eingebaut ist, um ein Eindringen in den Raum der Kabine zu detektieren.

## Claims

1. A device for detecting the intrusion of a moving body into a predetermined space (5), comprising an ultrasonic transmitter (7) in said space, a sensor (8) for detecting the echoes of the beam emitted by the transmitter in said space in order to produce a signal representing said echoes, and electronic means for processing said signal in order to ascertain any presence of a moving body in said space (5), characterised in that it comprises a) means (10) for orientation of the transmitter (7) in order to sweep this space (5) with the ultrasonic beam and b) means (11) for simultaneously moving the echo sensor (8) so as to optimise the signal/noise ratio of the output of said sensor (8).

2. A device according to Claim 1, characterised in that it comprises means for controlling the positions of the transmitter (7) and of the sensor (8) with respect to one another, in accordance with a predetermined law.

3. A device according to Claim 2, characterised in that said predetermined law is also designed to minimise any possible effects of parasitic echoes on the signal produced by said sensor (8).

4. A device according to any one of Claims 2 and 3, characterised in that the transmitter (7) and the sensor (8) are each associated with means for detecting their position which deliver a signal representing this position to electronic means for processing the signal produced by the sensor and to the position controlling means.

5. A device according to any one of Claims 1 to 4, characterised in that said means for sweeping (10) and movement (11) are designed to permit increased monitoring of at least one particular area of said space (5).

6. A motor vehicle comprising a device according to any one of Claims 1 to 5 installed in the passenger compartment of the vehicle in order to detect any intrusion into the space of said passenger compartment.
